# FASCICULE DE BREVET EUROPEEN

(11) **EP 1 641 094 B1**
(45) Date de publication et mention de la délivrance du brevet: **02.11.2011**
(21) Numéro de dépôt: 05356176.7
(22) Date de dépôt: 26.09.2005
(51) Int. Cl.: H02B 1/26, H05K 7/14, H02G 3/08

(54) **Coffret de raccordement de câbles conducteurs**
Kasten zum Verbinden von elektrischen Kabeln
Cabinet for connecting electrical cables

(30) Priorité: 27.09.2004 FR 0410198
(43) Date de publication de la demande: 29.03.2006
(73) Titulaire: Mecelec, 07300 Mauves (FR); Nexans, 75008 Paris (FR)
(72) Inventeur: Rageau, Laurent, 26600 La Roche de Glun (FR); Chapon, Michel, 07300 Glun (FR); Andre, Patrick, 08000 La Francheville (FR)
(74) Mandataire: Myon, Gérard Jean-Pierre

(56) Documents cités:
- GB-A- 247 289
- JP-A- 11 275 716
- JP-A- 2001 339 819
- US-A- 4 131 330
- US-A- 4 382 271

## Description

La présente invention a trait à un coffret de raccordement de câbles conducteurs.

Dans le domaine de la distribution de courant électrique, il est connu de raccorder des câbles conducteurs entre eux au moyen de fusibles ou de barreaux conducteurs reliant entre eux des connecteurs sur lesquels sont raccordées les extrémités des conducteurs de ces câbles. Il est connu de disposer de tels connecteurs à l'intérieur de coffrets qui sont généralement montés dans une configuration globalement verticale et dans lesquels les câbles conducteurs arrivent par le sol, c'est-à-dire en partie inférieure des coffrets. Dans un coffret classique, un conducteur amont et un conducteur aval sont utilisés pour chaque phase du courant et pour le neutre, ce qui induit que, dans le cas d'un courant triphasé, huit conducteurs de câble de section relativement importante sont disposés côte à côte au voisinage de la paroi arrière ou paroi de fond du coffret. Il s'avère en pratique difficile pour l'installateur de les positionner correctement par rapport aux connecteurs dans lesquels leurs extrémités respectives doivent être introduites. L'opérateur doit exercer des efforts relativement importants pour forcer les extrémités des câbles à pénétrer dans les logements correspondants des connecteurs, ce qui est pénible et consommateur de temps.

GB-A-247289 décrit un tel exemple de l'art antérieur.

C'est à ces inconvénients qu'entend plus particulièrement remédier l'invention en proposant un nouveau coffret de raccordement de câbles conducteurs dont la mise en service et les opérations de maintenance sont plus aisées que pour les matériels connus.

Dans cet esprit, l'invention concerne un coffret de raccordement de câbles conducteurs comprenant une enveloppe présentant une paroi arrière sur la face interne sur laquelle sont montés des connecteurs de raccordement des câbles, chaque connecteur définissant un logement de réception et de blocage de l'extrémité d'un conducteur de câble dans une configuration telle que cette extrémité est globalement alignée sur un axe central de ce logement. Ce coffret est caractérisé en ce que l'axe central en question est, pour l'un au moins des connecteurs, incliné par rapport à la face interne d'un voile principal de la paroi arrière précitée et s'éloigne de cette face interne en s'éloignant du connecteur en direction d'une zone d'entrée dans le volume intérieur du coffret du câble conducteur qui est raccordé sur le connecteur en question.

Grâce à l'invention, l'inclinaison de l'axe central du logement du ou des connecteurs permet d'orienter ce ou ces logements par rapport à la face interne de la paroi arrière du coffret, de telle sorte que la mise en place de l'extrémité du conducteur de câble dans ce logement situé à l'intérieur du coffret est facilitée.

Selon des aspects avantageux mais non obligatoires de l'invention, un tel coffret peut incorporer une ou plusieurs des caractéristiques suivantes des revendications 2 à 11.

L'invention sera mieux comprise et d'autres avantages de celle-ci apparaîtront plus clairement à la lumière de la description qui va suivre de deux modes de réalisation d'un coffret conforme à son principe, donnée uniquement à titre d'exemple et faite en référence aux dessins annexés, dans lesquels :
- la figure 1 est une vue en perspective éclatée d'un coffret conforme à l'invention avant son installation sur site ;
- la figure 2 est une vue de face du coffret de la figure 1 dont le panneau de fermeture a été retiré et alors que les câbles conducteurs sont en place ;
- la figure 3 est une coupe à plus grande échelle suivant la ligne III-III à la figure 2;
- la figure 4 est une vue à plus grande échelle du détail IV à la figure 1, certains connecteurs ayant été supprimés pour la clarté du dessin ; et
- la figure 5 est une vue analogue à la figure 3 pour un coffret conforme à un second mode de réalisation de l'invention.

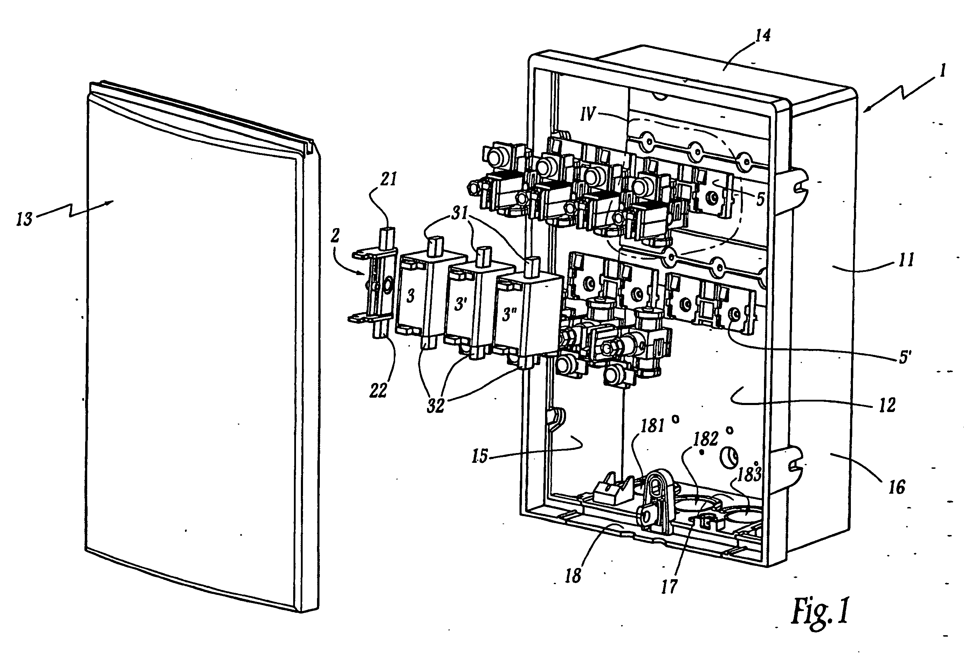

Le coffret 1 représenté aux figures 1 à 3 est prévu pour le raccordement de quatre conducteurs A₁ à A₄ d'un câble amont A avec quatre conducteurs B₁ à B₄ d'un câble aval B, les conducteurs A₁ et B₁ véhiculant le neutre, alors que les conducteurs A₂ à A₄ et B₂ à B₄ véhiculent les trois phases d'un courant électrique. Un barreau conducteur 2 est prévu pour assurer la continuité du circuit entre les conducteurs A₁ et B₁, alors que trois fusibles 3, 3' et 3" sont prévus pour assurer la continuité du circuit entre les conducteurs de phase. Le barreau 2 et les fusibles 3, 3' et 3" sont chacun pourvus de couteaux 21 et 22, respectivement 31 et 32, destinés à être chacun engagés dans une mâchoire formée par un connecteur amont ou aval.

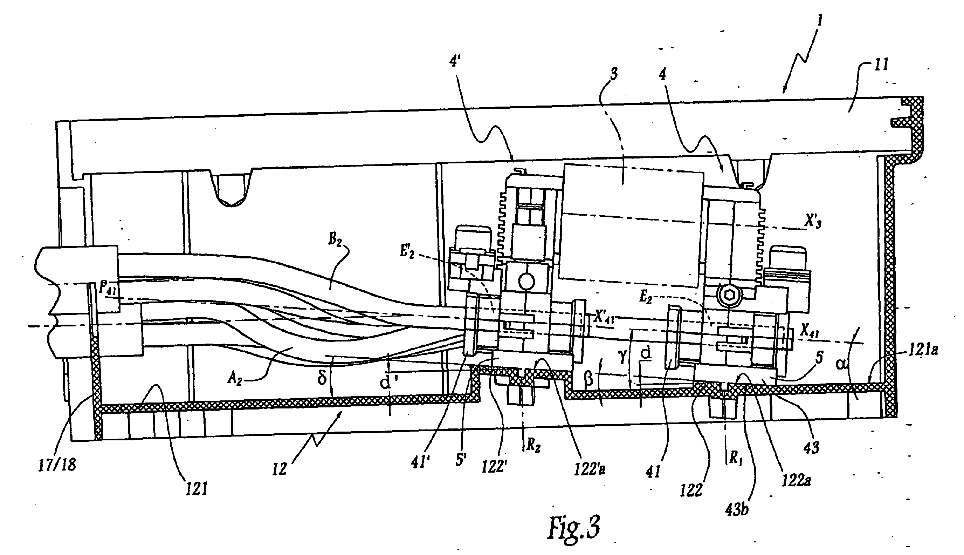

A la figure 3, les câbles conducteurs A₃ et B₃ sont omis pour la clarté du dessin.

Les connecteurs 4 utilisés pour raccorder les extrémités des conducteurs au barreau 2 ou aux fusibles 3, 3' et 3" sont montés sur la paroi arrière 12 de la cuve 11 du coffret 1 sur laquelle est destiné à être rapporté un panneau de fermeture 13. Quatre connecteurs amont 4 sont disposés selon une première rangée R₁ située en partie haute de la cuve 11 et parallèle à sa face supérieure 14, alors que quatre connecteurs aval 4' sont disposés selon une seconde rangée R₂ parallèle à la rangée R₁ et située en dessous de celle-ci.

Les connecteurs 4 et 4' sont tous identiques.

Chaque connecteur 4 définit un logement ou cage 41 de réception de l'extrémité d'un conducteur amont ou aval qui permet d'immobiliser l'extrémité d'un conducteur et de la raccorder électriquement aux parties conductrices du connecteur 4 considéré.

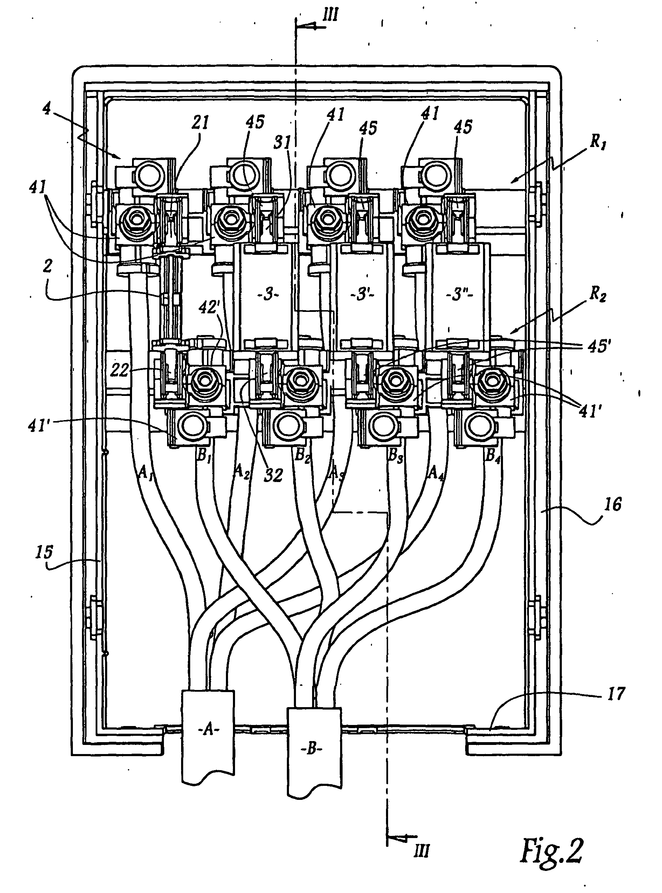

Comme il ressort plus particulièrement de la figure 3, l'extrémité E₂ du conducteur amont A₂ est reçue dans la cage 41 d'un premier connecteur amont 4 en étant immobilisé dans celle-ci au moyen d'une vis 42 visible aux figures 1 et 2. On note X₄₁ l'axe central de la cage 41 selon lequel est alignée l'extrémité E₂ lorsqu'elle est immobilisée dans cette cage.

Cet axe n'est pas parallèle au voile de fond 121 de la paroi 12 mais incliné par rapport à celui-ci d'un angle α de l'ordre de 5°. L'axe X₄₁ de la cage 41 est sensiblement parallèle aux côtés 15 et 16 de la cuve 11 et s'éloigne du voile 121 en allant vers la partie inférieure 17 de la cuve 11 au niveau duquel les conducteurs A₁ à A₄, et B₁ à B₄ pénètrent dans le volume intérieur du coffret 1.

En pratique, les conducteurs A₁ à A₄ et B₁ à B₄ longent globalement la paroi arrière 12 de la cuve 11, sur son côté intérieur, entre la partie 17 et les connecteurs 4.

L'inclinaison de l'axe X₄₁ induit une inclinaison correspondante de l'extrémité E₂ et du conducteur A₂ sur une partie au moins de sa longueur entre le connecteur 4 et la partie 17. Ainsi, l'installateur peut courber le conducteur A₂ pour introduire l'extrémité E₂ relativement facilement dans la cage 41.

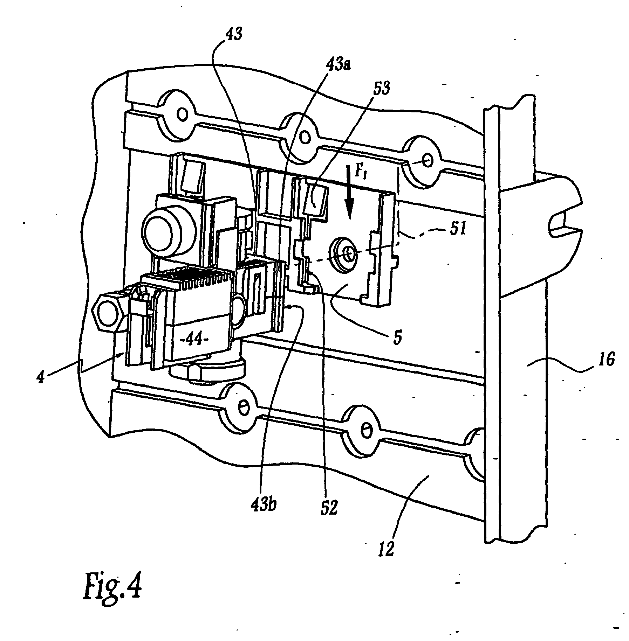

Les connecteurs 4 et 4' des rangées R₁ et R₂ sont montés sur deux rails 5 et 5' fixés sur la paroi 12 par des vis 51 représentées par leurs traits d'axe uniquement à la figure 4. Ces rails définissent chacun des paires de glissières 52 s'étendant verticalement en configuration montée du coffret et dans lesquelles peuvent être reçues des parties saillantes 43a formées par une semelle plane 43 de part et d'autre de chaque connecteur 4 ou 4'. La semelle 43 fait partie d'une enveloppe isolante 44 qui entoure les parties électriquement conductrices de chaque connecteur. Ainsi, il est possible de mettre en place chaque connecteur 4 ou 4' dans le coffret 1 en faisant glisser sa semelle contre le rail 5 ou 5' correspondant, de telle sorte que les parties 43 de celle-ci s'engagent dans les glissières 52 par un déplacement dans le sens de la flèche F₁ à la figure 4. Chaque partie des rails 5 et 5' destinée à recevoir un connecteur 4 est pourvue d'une lamelle élastique 53 destinée à être plaquée vers la paroi 12 lors de l'introduction des parties saillantes 43a de la semelle 43 dans les glissières 52, cette lamelle 53 reprenant sa position représentée à la figure 4 par élasticité lorsque le connecteur 4 ou 4' est en place et s'opposant ainsi au mouvement du connecteur 4 ou 4' dans le sens inverse de la flèche F₁.

La semelle 43 est plane et sa face 43b tournée vers le voile 121 est sensiblement parallèle à l'axe X₄₁.

L'inclinaison de l'axe X₄₁ du connecteur 4 représenté à la figure 3 est obtenue par le fait que la partie en relief 122 de la paroi 12 sur laquelle est monté le rail 5 de la rangée R₁ présente une face 122a d'appui du rail 5 qui est incliné d'un angle β par rapport à la face interne 121a du voile 121. En pratique, les angles α et β sont de même sens et ont la même valeur, ce qui correspond au fait que la surface inférieure de la semelle du connecteur 4 est globalement parallèle à l'axe X₄₁. Ceci n'est cependant pas obligatoire.

Le connecteur 4' destiné à recevoir l'extrémité E'₂ du câble B₂ est identique au connecteur 4 et définit également une cage 41' dans laquelle cette extrémité est immobilisée par une vis 42'. L'axe X'₄₁ de cette cage est également incliné par rapport à la surface 121a de la paroi 12 d'un angle Υ dont la valeur est identique à celle de l'angle α.

Cette construction permet également d'obtenir une inclinaison de l'extrémité E'₂ et du câble B₂ dans le coffret 1 et par rapport à la paroi 12.

Comme le connecteur 4, le connecteur 4' est monté sur un rail 5' qui est lui-même rapporté sur une partie en relief 122' de la paroi 122 dont la face 122'a destinée à recevoir le rail 5' est inclinée par rapport au voile 121 d'un angle δ dont la valeur est, en pratique, égale à celle de l'angle β.

Les angles β et δ peuvent être différents, auquel cas les angles α et γ sont différents. L'orientation relative des mâchoires 45 et 45' des connecteurs 4 et 4' est alors corrigée par une adaptation de ces connecteurs.

La partie 122' est plus saillante par rapport au voile 121 que la partie 122 en ce sens que la distance d'entre le milieu de la face 122'a et la face 121a du voile 121 est supérieure à la distance d entre le milieu de la face 122a et la surface 121a. Ainsi, la cage 41' du connecteur 4' est plus éloignée du voile 121 que la cage 41, cet aspect de l'invention permettant de garantir un alignement des mâchoires respectives 45 et 45', des connecteurs 4 et 4' destinés à recevoir le fusible 3', comme représenté en traits mixtes à la figure 3. Les axes X₄₁ et X'₄₁ des différentes cages 41 et 41' sont ainsi coplanaires et inclus dans un plan P₄₁ dont la trace est confondue avec ces axes à la figure 3.

Compte tenu de ce qui précède, l'axe longitudinal X'₃ du fusible 3' est également incliné de l'angle α par rapport au voile 121 de la paroi 12, ce qui s'avère avantageux dans la mesure où un coffret tel que le coffret 1 est généralement installé près du sol, de telle sorte que l'opérateur ou l'installateur y accède à la fois par l'avant et par en haut. Lorsqu'il met en place ou retire le fusible 3, l'un des autres fusibles 3' et 3" ou le barreau 2, il a tendance à exercer un effort incliné par rapport à la paroi 12 du fait de la direction par laquelle il accède au volume intérieur du coffret 1. L'inclinaison de l'axe X₃ permet d'orienter le fusible 3' de telle façon qu'il est globalement perpendiculaire à la direction selon laquelle l'opérateur accède aux mâchoires 45 et 45', donc plus facile à mettre en place et à retirer qu'avec un coffret de l'état de la technique.

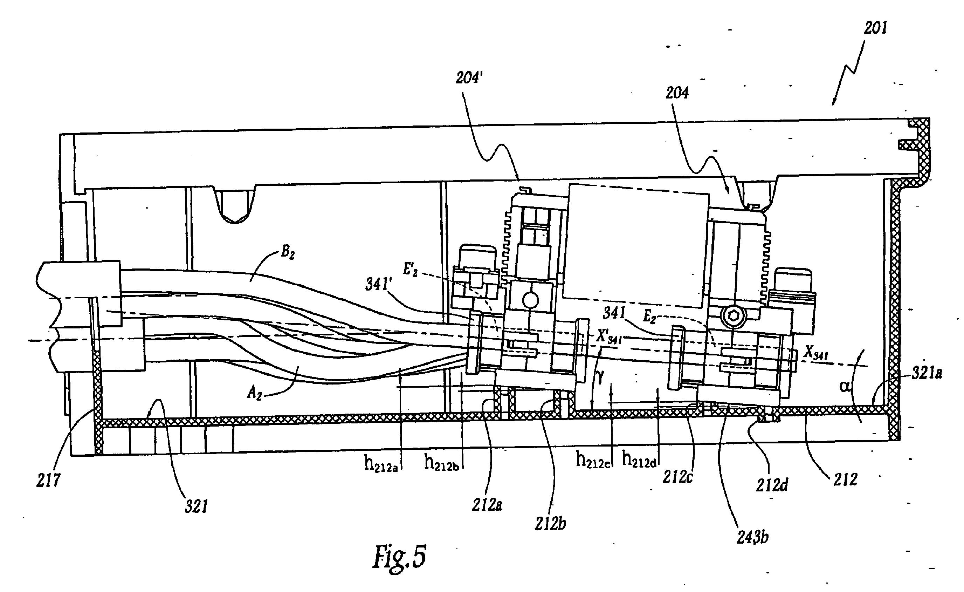

Dans le second mode de réalisation de l'invention représenté à la figure 5, les éléments analogues à ceux du premier mode de réalisation portent des références identiques augmentées de 200. Le coffret 201 de ce mode de réalisation comprend plusieurs connecteurs dont deux sont représentés sur les figures avec les références 204 et 204', ces connecteurs permettent de raccorder un conducteur amont A₂ à un conducteur aval B₂ dont les extrémités E₂ et E'₂ sont respectivement reçues dans des cages 341 et 341', formées par les connecteurs 204 et 204' et dont les axes X₃₄₁ et X'₃₄₁ sont inclinés d'un même angle α par rapport au voile de fond 321 du coffret 201. Ce mode de réalisation diffère du précédent par les moyens de montage des connecteurs 204 et 204' sur la paroi de fond 212 du coffret 201. Cette paroi est équipée de bossages creux 212a, 212b, 212c et 212d qui sont de plus en plus saillants en direction du volume intérieur du coffret 1 au fur et à mesure que l'on se rapproche de la partie inférieure 217 de ce coffret. En d'autres termes, les hauteurs respectives h₂₁₂ₐ, h_{212b}, h_{212c} et h_{212d} des bossages 212a à 212d par rapport à la face interne 321a du voile 321 sont décroissantes. Ces bossages creux sont destinés à recevoir des pions 246 faisant saillie à partir de la face inférieure plane 243b des connecteurs 204 et 204' et permettant d'immobiliser ceux-ci sur la paroi 212. La face 243b d'un connecteur 204 ou 204' est parallèle à l'axe X₃₄₁ ou X' ₃₄₁ qu'il définit. Le caractère progressivement saillant des bossages 212d à 212a permet d'obtenir l'inclinaison des axes X₃₄₁ et X' ₃₄₁.

En pratique, quatre pions 246 peuvent être prévus au niveau de la base de chaque connecteur 204 et 204'. Pour assurer une immobilisation effective des connecteurs 204 et 204' sur la paroi 212. L'un de ces pions peut être remplacé par une vis serrée dans l'un des bossages creux.

Dans les deux modes de réalisation représentés, les axes X₄₁ et X'₄₁ des cages 41 et 41' et les axes X₃₄₁ et X'₃₄₁ des cages 341 et 341' sont sensiblement coplanaires, en ce sens qu'ils ont une trace commune dans le plan des figures 3 et 5. Cet aspect de l'invention tire parti de l'égalité des angles α et Y définis pour le coffret du premier mode de réalisation et des angles correspondants pour le coffret du second mode de réalisation.

Comme il ressort plus particulièrement de la figure 1 et selon un aspect qui est également applicable au second mode de réalisation de l'invention, le coffret 1 est équipé d'un tiroir 18 destiné à être rapporté sur la partie inférieure 17 et qui définit des orifices 181, 182 et 183 de passage des conducteurs A₁ à A₄ et B₁ à B₄. Ces orifices sont ménagés à distance de la paroi 12 et sont décalés entre eux, en ce sens qu'ils s'étendent à des distances différentes par rapport à cette paroi 12. Cet aspect de l'invention induit que les câbles pénétrant dans le volume intérieur du coffret 1 peuvent avoir leurs conducteurs respectifs répartis en deux nappes qui s'étendent à des distances différentes de la paroi 12, les conducteurs du câble amont étant plus proches de la paroi 12 que ceux du câble aval.

L'invention a été représentée avec des connecteurs 4 et 4' ou 204 et 204' identiques. Elle s'applique également au cas où des connecteurs amont différents des connecteurs aval sont utilisés.

Au sens de la présente invention, une armoire électrique est un type de coffret particulier auquel peut s'appliquer l'invention.

## Revendications

1. Coffret de raccordement de câbles conducteurs comprenant une enveloppe présentant une paroi arrière sur la face interne de laquelle sont montés des connecteurs de raccordement desdits câbles, chaque connecteur définissant un logement de réception et de blocage de l'extrémité d'un conducteur de câble dans une configuration telle que ladite extrémité est globalement alignée sur un axe central dudit logement,
**caractérisé en ce que**
ledit axe central (X₄₁, X'₄₁; X₃₄₁, X'₃₄₁) est, pour l'un qu moins desdits connecteurs (4, 4'; 204, 204'), incliné (α, γ) par rapport à la face interne (121a, 321a) d'un voile principal (121, 321) de ladite paroi arrière (12; 212) et s'éloigne de ladite face interne en s'éloignant dudit connecteur en direction d'une zone (17, 18) d'entrée, dans le volume intérieur dudit coffret, du conducteur (A₁-A₄, B₁-B₄) raccordé audit connecteur.

2. Coffret selon la revendication 1, **caractérisé en ce que** tous les connecteurs (4, 4' ; 204, 204') montés sur ladite paroi arrière (12 ; 212) ont l'axe central (X₄₁, X'₄₁ ; X₃₄₁, X'₃₄₁) de leur logement (41, 41' ; 341, 341') incliné (α, γ) par rapport audit voile principal (121, 321) en s'éloignant du connecteur concerné en direction d'une zone (17, 18) d'entrée des conducteurs (A₁-A₄, B₁-B₄) raccordés auxdits connecteurs.

3. Coffret selon la revendication 2, **caractérisé en ce que** l'angle d'inclinaison (α, γ) desdits axes centraux (X₄₁, X'₄₁ ; X₃₄₁, X'₃₄₁) est sensiblement le même pour tous lesdits connecteurs (4, 4' ; 204, 204').

4. Coffret selon l'une des revendications précédentes, **caractérisé en ce qu'**il est équipé, en partie basse, d'un tiroir (18) définissant des orifices (181, 182, 183), d'entrée de conducteurs (A₁-A_{4,} E₁-B₄) dans ledit coffret, lesdits orifices étant décalés par rapport à ladite paroi arrière (12 ; 212) et décalés entre eux.

5. Coffret selon l'une des revendications précédentes, **caractérisé en ce que** l'angle d'inclinaison (α, γ)) dudit ou de chaque axe central (X₄₁, X'₄₁ ; X₃₄₁, X'₃₄₁) est compris entre trois et dix degrés, de préférence de l'ordre de cinq degrés.

6. Coffret selon l'une des revendications précédentes, **caractérisé en ce que** l'axe central (X₄₁, X'₄₁ ; X₃₄₁, X'₃₄₁) dudit logement (41, 41' ; 341, 341') dudit ou de chaque connecteur (4, 4' ; 204, 204') est globalement parallèle à la face (43b ; 243b) dudit connecteur tournée vers ladite paroi arrière (12 ; 212).

7. Coffret selon la revendication 6, **caractérisé en ce que** ladite paroi arrière (12) est pourvue d'au moins une glissière (52) de réception d'une semelle débordante (43) prévue sur ledit ou sur chaque connecteur (4, 4'), ladite glissière étant montée inclinée (β, δ) par rapport à un voile principal (121) de ladite paroi arrière.

8. Coffret selon la revendication 7, **caractérisé en ce que** ladite glissière (52) est rapportée sur ladite paroi arrière (12) par engagement sur un relief (122, 122') dont la face (122a, 122'a) recevant ladite glissière est inclinée (β, δ) par rapport audit voile principal (121).

9. Coffret selon la revendication 5, **caractérisé en ce que** ladite paroi arrière (212) est pourvue, sur sa face interne (321a), de bossages creux (212a, 212b, 212c, 212d) de réception de plusieurs moyens de montage (246) faisant saillie à partir dudit côté (243b) dudit ou de chaque connecteur (204, 204') et **en ce que** lesdits bossages sont de hauteurs (h₂₁₂ₐ, h_{212b}, h_{212c,} h_{212d}) différentes par rapport à ladite paroi arrière.

10. Coffret selon l'une des revendications précédentes, **caractérisé en ce que** lesdits connecteurs (4, 4' ; 204, 204') sont disposés sur deux rangées (R₁, R₂) globalement parallèles, les logements de réception (41' ; 341') des connecteurs (4' ; 204') de là rangée (R₂) la plus proche d'une zone (17, 18) d'entrée des conducteurs de câble (A₁-A₄, B₁-B₄) dans le coffrer (1 ; 201) étant disposés, par rapport à un voile principal (121 ; 321) de ladite paroi arrière (12, 212), à une distance (d') supérieure à celle (d) séparant ledit voile principal des logements de réception (41 ; 341) des connecteurs (4 ; 204) de l'autre rangée (R₁).

11. Coffret selon la revendication 10, **caractérisé en ce que** les axes centraux (X₄₁, X'₄₁ ; X₃₄₁, X'₃₄₁) des connecteurs (4, 4' ; 204, 204') sont globalement coplanaires (P₄₁).

## Claims

1. Connection box for conductive cables, comprising an envelope with a rear wall, on the inner surface of which there are fitted connectors for connection of the said cables, each connector defining a receptacle for receipt and blocking of the end of a cable cor.ductor, in a configuration such that the said end is globally aligned on a central axis of the said receptacle, **characterised in that**, for at least one of the said connectors (4, 4'; 204, 204') the said central axis (X₄₁, X'₄₁, X₃₄₁, X'₃₄₁) is inclined (α, γ) relative to the inner surface (121a, 321a) of a main shell (121, 321) of the said rear wall (12, 212) and is spaced from the said inner surface whilst being spaced from the said connector in the direction of an area (17, 18), in the inner volume of the said box, for intake of the conductor (A₁-A₄, B₁-B₄) which is connected to the said connector.

2. Box according to claim 1, **characterised in that** all the connectors (4, 4' ; 204, 204') which are fitted on the said rear wall (12; 212) have the central axis (X₄₁, X'₄₁, X₃₄₁, X'₃₄₁) of their receptacle (41, 41' ; 341, 341') inclined (α, γ) relative to the said main shell (121, 321) whilst being spaced from the connector concerned in the direction of an area (17, 18) for intake of the conductors (A₁-A₄, B₁-B₄) which are connected to the said connectors.

3. Box according to claim 1, **characterised in that** the ancle of inclination (α, γ) of the said central axes (X₄₁, X'₄₁, X₃₄₁, X' ₃₄₁) is substantially the same for all the said connectors (4, 4'; 204, 204').

4. Box according to one of the preceding claims, **characterised in that** it is equipped in the bottom part with a draw unit(18) which defines apertures (181, 182, 183) for intake of conductors (A₁-A₄, B₁-B₄) into the said box, the said apertures being offset relative to the said rear wall (12; 212), and being offset from one another.

5. Box according to one of the preceding claims, **characterised in that** the angle of inclination (α, γ) of the said or of each central axis (X₄₁, X'₄₁, X₃₄₁' X'₃₁₁) is between three and ten degrees, and is preferably approximately five degrees.

6. Box according to one of the preceding claims, **characterised in that** the central axis (X_{41'} X'₄₁, X_{341,} X'₃₄₁) of the said receptacle (41, 41' ; 341, 341') of the said or of each connector (4, 4' ; 204') is globally parallel to the surface (43b; 243b) of the said connector which faces towards the said rear wall (12 ; 212).

7. Box according to claim 6, **characterised in that** the said rear wall (12) is provided with at least one slide (52) for receipt of a projecting plate (43) which is provided on the said or on each connector (4, 4'), the said slide being fitted inclined (β, δ) relative to a main shell (121) of the said rear wall.

8. Box according to claim 7, **characterised in that** the said slide (52) is added on to the said rear wall (12) by engagement on a relief (122, 122'), the surface (122a, 122'a) of which that receives the said slide is inclined (β, δ) relative to the said main shell (121).

9. Box according to claim 5, **characterised in that** the said rear wall (212) is provided on its inner surface (321a) with hollow bosses (212a, 212b, 212c, 212d) for receipt of a plurality of fitting means (246) which extend from the said side (243b) of the said or of each connector (204, 204'), and **in that** the said bosses have heights (h_{212a,} h_{212b,} h_{212c,} h_{212d}) which are different relative to the said rear wall.

10. Box according to one of the preceding claims, **characterised in that** the said connectors (4, 4' ; 204, 204') are arranged in two rows (R₁, R₂) which are globally parallel, the receptacles (41'; 341') for receipt of the connectors (4' ; 204') in the row (R₂) which is closest to an area (17, 18) of intake of the cable conductors (A₁-A_{4,} B₁-B₄) into the box (1; 201) bering arranged, relative to a main shell (121; 321) of the said rear wall (12, 212) at a distance (d') which is greater than that (d) which separates the said main shell from the receptacles (41; 341) for receipt of the connectors (4; 204) in the other row (R₁).

11. Box according to claim 10, **characterised in that** the central axes (X₄₁, X'₄₁, X₃₄₁, X'₃₄₁) of the connectors (4, 4' ; 204, 204') are globally coplanar (P₄₁).

## Patentansprüche

1. Kasten zur Verbindung von Leiterkabeln, der ein Gehäuse umfasst, das eine hintere Wand aufweist, auf deren Innenseite Stecker zur Verbindung der Kabel angebracht sind, wobei jeder Stecker einen Sitz zur Aufnahme und zur Arretierung des Endes eines Kabelleiters in einer Ausgestaltung bestimmt, derart, dass das Ende im Ganzen auf eine Mittellinie des Sitzes ausgerichtet ist,
**dadurch gekennzeichnet, dass**
die Mittellinie (X₄₁, X'₄₁ ; X₃₄₁, X'₃₄₁) für wenigstens einen der Stecker (4, 4'; 204, 204') in Bezug zur Innenseite (121a, 321a) einer Hauptabdeckung (121, 321) der hinteren Wand (12, 212) geneigt (α, γ) ist und sich von der Innenseite entfernt, indem sie sich von dem Stecker in Richtung eines Bereichs (17, 18) zur Einführung des mit dem Stecker verbundenen Leiters (A₁ bis A₄, B₁ bis B₄) in den Innenraum des Kastens entfernt.

2. Kasten nach Anspruch 1, **dadurch gekennzeichnet, dass** die Mittellinie (X₄₁ X'₄₁ ; X₃₄₁, X'₃₄₁) des Sitzes (41, 41'; 341, 341') aller Stecker (4, 4': 204 204'), die auf der hinteren Wand (12; 212) angebracht sind, in Bezug zur Hauptabdeckung (121, 321) geneigt (α, γ) ist, indem sie sich vom betreffenden Stecker in Richtung eines Bereichs (17, 18) zur Einführung der mit den Steckern verbundenen Leiter (A₁ bis A₄, B₁ bis B₄) entfernt.

3. Kas:en nach Anspruch 2, **dadurch gekennzeichnet, dass** der Neigungswinkel (α, γ) der Mittellinien (X₄₁, X'₄₁ ; X₃₄₁, X'₃₄₁) für alle der Stecker (4, 4'; 204, 204') im Wesentlichen gleich ist.

4. Kasten nach einem der vorhergehenden Ansprüche, **dadurch gekennzeichnet, dass** er im unteren Abschnitt mit einem Einschub (18) ausgestaltet ist, der Öffnungen (181, 182, 183) zur Einführung von Leitern (A₁ bis A₄, B₁ bis B₄) in den Kasten bestimmt, wobei die Öffnungen in Bezug zur hinteren Wand (12; 121) versetzt sind und gegeneinander versetzt sind.

5. Kasten nach einem der vorhergehenden Ansprüche, **dadurch gekennzeichnet, dass** der Neigungswinkel (α, γ) der oder jeder Mittellinie (X₄₁ X'₄₁; X₃₄₁, X'₃₄₁) zwischen drei und fünf Grad, vorzugsweise in der Größenordnung von fünf Grad, enthalten ist.

6. Kasten nach einem der vorhergehenden Ansprüche, **dadurch gekennzeichnet, dass** die Mittellinie (X₄₁, X'₄₁; X₃₄₁, X'₃₄₁) des Sitzes (41, 41'; 341, 341') des oder jedes Steckers (4, 4'; 204, 204') im Ganzen parallel zur Seite (43b; 243b) des Steckers ist, die der hinteren Wand (12; 212) zugewandt ist.

7. Kasten nach Anspruch 6, **dadurch gekennzeichnet, dass** die hintere Wand (12) mit mindestens einer Führungsbahn (52) zur Aufnahme einer überstehenden Platte (43) versehen ist, die auf dem oder jedem Stecker (4, 4') vorgesehen ist, wobei die Führungsbahn in Bezug zu einer Hauptabdeckung (121) der hinteren Wand geneigt (β, δ) angebracht ist.

8. Kasten nach Anspruch 7, **dadurch gekennzeichnet, dass** die Führungsbahn (52) durch Eingriff auf einer Erhöhung (122, 122'), deren Seite (122a, 122'a), die die Führungsbahn aufnimmt, in Bezug zur Hauptabdeckung (121) geneigt (α, γ) ist, auf der hinteren Wand (12) aufgesteckt ist.

9. Kas:en nach Anspruch 5, **dadurch gekennzeichnet, dass** die hintere Wand (212) auf ihrer Innenseite (321a) mit hohlen Vorsprüngen (212a, 212b, 212c, 212d) zur Aufnahme mehrerer Anbringungsmittel (246) versehen ist, die ausgehend von der Seite (243b) des oder jedes Steckers (204, 204') hervorragen, und dadurch, dass die Vorsprünge verschieden, Höhen (h₂₁₂ₐ, h_{212b}, h_{212c}, h_{212d}) in Bezug zur hinteren Wand aufweisen

10. Kas:en nach einem der vorhergehenden Ansprüche, **dadurch gekennzeichnet, dass** die Stecker (4, 4'; 204, 204') in zwei im Ganzen parallelen Reihen (R₁, R₂) angeordnet sind, wobei die Aufnahmesitze (41' 341 der Stecker (4'; 204') der Reihe (R₂)', die sich am nächsten an einem Bereich (17, 18) zur Einführung der Kabelleiter (A₁ bis A₄, B₁ bis B₄) n den Kasten (1; 201) befindet, in Bezug zu einer Hauptabdeckung (12'; 321) der hinteren Wand (12, 212) in einer Entfernung (d') angeordnet sind, die größer ist als diejenige (d), die die Hauptabdeckung von den Aufnahmesitzen (41; 341) der Stecker (4; 204) der anderen Reihe (R₁) trennt.

11. Kassen nach Anspruch 10, **dadurch gekennzeichnet, dass** die Mittellinien (X₄₁ X'₄₁; X₃₄₁, X'₃₄₁) der Stecker (4, 4'; 204, 204') im Ganzen in derselben Ebene (P₄₁) liegen.
